# EUROPEAN PATENT APPLICATION

(11) **EP 2 508 766 A1**
(43) Date of publication of application: **10.10.2012**
(21) Application number: 12159282.8
(22) Date of filing: 13.03.2012
(51) Int. Cl.: F16C 3/02

(54) **Hollow shaft**

(30) Priority: 07.04.2011 GB 201105870
(71) Applicant: Rolls-Royce plc, London SW1E 6AT (GB)
(72) Inventor: Howells, Philip Thomas, Goole, East Riding of North Yorkshire DN14 7JA (GB)
(74) Representative: Tindall, Adam

(57) **Abstract**

A hollow shaft 102 for transmitting torsion or bending forces is disclosed. The hollow shaft 102 comprises a first portion 108 having a first wall thickness t₁, a second portion 110 having a second wall thickness t₂ which is greater than the first wall thickness t₁, and a transition region 112 between the first and second portions 108, 110. The transition region comprises inner 106 and outer annular 104 shoulder fillets, the inner shoulder fillet 106 being axially offset from the outer shoulder fillet 104 towards the first portion 108. In this manner, the local stress concentrations caused by the inner and outer fillets are axially staggered along the transition region.

## Description

The present invention relates to a hollow shaft and particularly to a hollow shaft for the transmission of rotary or bending forces.

### Background

Hollow shafts are known and used in many mechanical devices for the transmission of axial forces, torque and bending forces. Such shafts may be found in automotive and aeronautical engines as well as many other industrial machines. One example of such a shaft is the low pressure (LP) shaft of a gas turbine engine, which transmits axial and bending loads as well as high levels of torque. It is known for such shafts to include a feature at which the wall thickness of the shaft changes. This may be required for cooperation with other machine components or to allow for changing design requirements along the shaft. A change in wall thickness may also be required to allow for component testing, as explained in further detail below with reference to the LP shaft of a gas turbine engine.

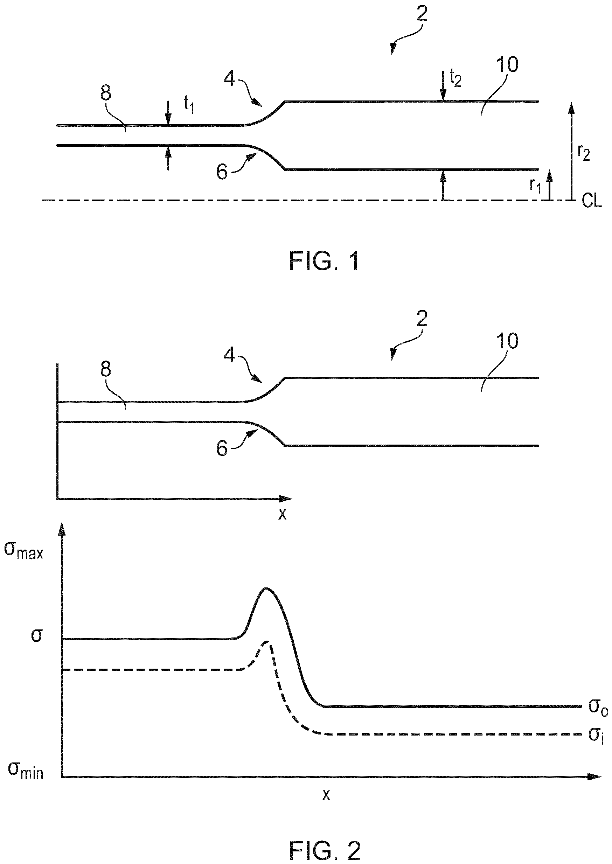

When a new engine is designed, or the design of an existing engine is updated, it may be necessary to redesign the LP shaft. Depending upon the level of redesign conducted on the shaft, fatigue testing of the newly designed shaft may be required to establish compliance with the relevant standards for the component. The operational loads experienced by the LP shaft, including G forces, can be difficult to replicate in a test environment, and consequently it is often necessary to test only the front or rear of the shaft, rather than the complete component. A representative end of the shaft is therefore prepared, with the shaft "cut off" at a middle region. The test component is placed in a testing rig, with the "cut" end being inserted into, and securely held within, a restraining portion of the testing rig. It is necessary to ensure that any failures during such a test occur at the feature being tested, and not at the restraint where the test shaft is held in the testing rig. For this reason, it is desirable to reduce as far as possible the local stresses in the region of the shaft where it is restrained. This is done by increasing the wall thickness of the shaft at the restraint end, generally via axially aligned shoulder fillets on the internal and external surfaces of the shaft, as illustrated in Figure 1.

Figure 1 is a sectional view through one half only of a hollow shaft 2 that has been thickened at one end for testing. The centreline CL of the shaft can be seen at the bottom of the Figure. Axially aligned fillets 4, 6 are illustrated between a test region 8 of the shaft 2, having a wall thickness *t₁,* and a restraint region 10 of the shaft 2, having an increased wall thickness *t₂*.

As noted above, axial, bending and torsion stresses are all carried by the shaft 2. Axial stresses reduce with increasing cross sectional area, and so increasing the wall thickness of the shaft at the restraint region 10 reduces the axial stresses carried by this region. Torsion and being stresses also reduce with increasing thickness, and so are reduced in the restraint region 10 by the increased wall thickness in this region. However, both torsion and bending stresses are also proportional to radius, meaning that the torsion and bending stresses carried on the outer surface at radius *r₂* are greater than those carried on the inner surface, at radius *r₁*.

The increased wall thickness in the restraint region 10 of the shaft has the desired effect of reducing stresses in this region. However, the fillets 4, 6, at which the thickness transitions from the smaller *t₁* to the larger *t₂*, act as local stress concentrators, giving rise to locally increased stresses by their presence. These fillets can thus become undesirable local failure points for the component. Current practice to reduce the likelihood of failure at the fillets is to use very large fillet radii which reduce the local stress concentration. However, even with large fillet radii, the fillets still cause a small local stress increase on the outer surface of the shaft, and the large fillet radii also result in lengthening of the component, which increases cost.

The local stress effect of the fillets 4, 6 can be seen in the graph of Figure 2, in which stress σ is plotted against axial location x. The stress on the outer surface is plotted as solid line σ*ₒ* and the stress on the inner surface is plotted as broken line σ*ᵢ*. The local stress concentrations caused by the fillets 4, 6, can be clearly seen in the peaks at which the outer surface stress σ*ₒ* rises above the stress experienced in the test region 8 of the shaft 2.

The present invention seeks to address some or all of the above mentioned disadvantages of existing shaft components.

### Summary of Invention

According to the present invention, there is provided a hollow shaft for transmitting torsion or bending forces, comprising a first portion having a first wall thickness; a second portion having a second wall thickness which is greater than the first wall thickness; and a transition region between the first and second portions comprising inner and outer annular shoulder fillets; wherein the inner shoulder fillet is axially offset from the outer shoulder fillet towards the first portion; and in a direction towards the second portion along the inner shoulder fillet, the wall thickness is increased; and in the same direction along the outer shoulder fillet, the wall thickness is further increased.

In the shaft of the present invention, the local stress concentrations caused by the inner and outer fillets are axially staggered along the transition region, such that the global stress reduction caused by the component wall thickening at the inner fillet may take effect before the local stress concentration in the outer surface resulting from the outer fillet is experienced.

The radius of the inner shoulder fillet may be less than or equal to the radius of the outer shoulder fillet.

An axial separation between the start locations of the inner and outer shoulder fillets may be greater than or equal to half the inner shoulder fillet radius.

The shoulder height of the inner shoulder fillet may be greater than or equal to the shoulder height of the outer shoulder fillet.

The second portion may comprise a mounting portion for a testing apparatus.

The shaft may comprise a component part of an engine. For example, the shaft may comprise a component part of a gas turbine engine, and may comprise the low pressure shaft of a gas turbine engine.

According to another aspect of the present invention, there is provided a method of forming a transition region between first and second portions of a hollow shaft, a wall thickness of the second portion being greater than a wall thickness of the first portion, the method comprising: forming an outer annular shoulder fillet; and forming an inner annular shoulder fillet that is axially offset from the outer shoulder fillet towards the first portion such that in a direction towards the second portion along the inner shoulder fillet, the wall thickness is increased; and in the same direction along the outer shoulder fillet, the wall thickness is further increased.

### Brief description of the drawings

For a better understanding of the present invention, and to show how it may be carried into effect, reference will now be made, by way of example, to the following drawings, in which:-
Figure 1 is a partial sectional view of a hollow shaft;
Figure 2 is a graph representing stress on inner and outer surfaces of the shaft of Figure 1 against axial location;
Figure 3 is a partial sectional view of a hollow shaft according to the present invention;
Figure 4 is a partial sectional view of the shaft of Figure 3, indicating the start locations of the fillets; and
Figure 5 is a graph representing stress on inner and outer surfaces of the shaft of Figures 3 and 4 against axial location.

### Detailed description of embodiments

The present invention provides a hollow shaft having inner and outer annular shoulder fillets located in a transition region between a first lesser wall thickness portion and a second increased wall thickness portion. The inner and outer fillets are axially offset, with the inner fillet being located towards the lesser wall thickness portion, and the outer fillet towards the increased wall thickness portion.

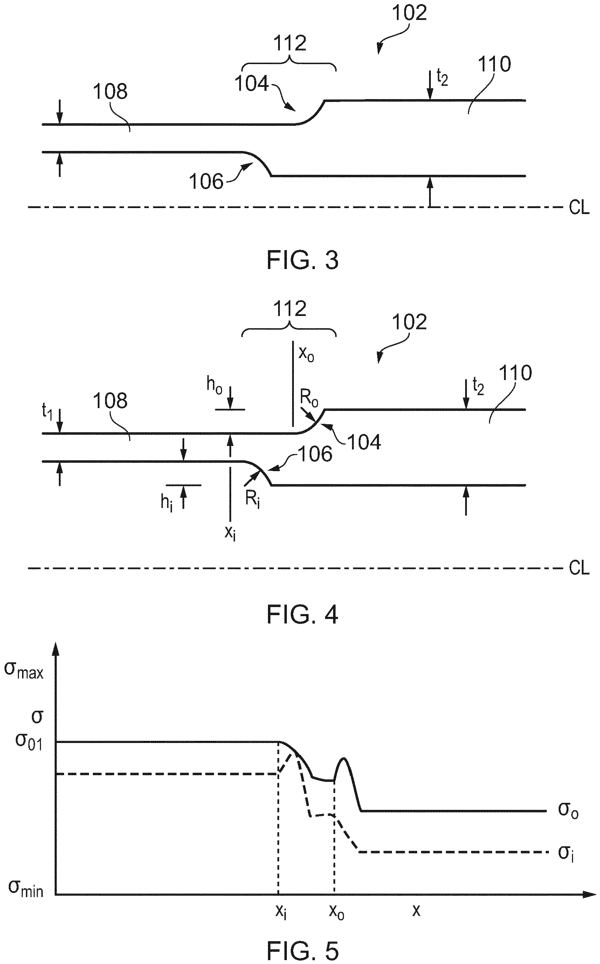

Figures 3 and 4 illustrate a hollow shaft 102 according to the present invention. The Figures are partial sectional representations, illustrating one half only of the shaft 102, with the centreline CL of the shaft 102 visible at the bottom of the Figures. The shaft 102 comprises a first portion 108, having a first wall thickness *t₁*, a second portion 110 having a second wall thickness *t₂*, which is greater than the first wall thickness *t₁*, and a transition region 112 between the first and second portions 108, 110.

The transition region 112 comprises inner and outer annular shoulder fillets 104, 106. The inner shoulder fillet 106 is axially offset from the outer shoulder fillet 104, towards the first portion 108. Thus, viewed in the x direction, the inner surface of the shaft 102 is thickened before the outer surface. The inner shoulder fillet 106 has a fillet radius *Rᵢ* and starts at an axial location *xᵢ*. The outer shoulder fillet 104 has a fillet radius *Rₒ* and starts as an axial location *xₒ*, which is axially offset from the inner start location *X_{¡}* by a separation distance d. The separation distance d may be chosen according to the particular requirements of the shaft, but according to one embodiment of the invention, the separation distance d between the start locations *xₒ*, *xᵢ* of the inner and outer shoulder fillets 104, 106 is at least equal to half the radius *Rᵢ* of the inner shoulder fillet 106. Also according to an embodiment of the invention, the radius *Rᵢ* of the inner shoulder fillet is equal to or less than the radius *Rₒ* of the outer shoulder fillet 104.

Each shoulder fillet 104, 106 has a shoulder height in the radial direction, being the separation in the radial direction between the relevant surface of the shaft in the first portion 108 and the same surface in the second portion 110. The shoulder heights of the fillets 104, 106 are illustrated on Figure 4 as *h_{¡}* and *hₒ*. According to a preferred embodiment, the height of the inner shoulder fillet *h¡* is equal to or greater than the height of the outer shoulder fillet *hₒ*.

Advantages provided by the shaft of the present invention are illustrated in the graph of stress σ plotted against axial location x shown in Figure 5. As in Figure 2, the stress on the outer surface is plotted as solid line σₒ and the stress on the inner surface is plotted as broken line σ*ᵢ*. As noted above, torsion and bending stresses are proportional to radius with torque usually the dominant force, meaning the stress on the outer surface of the shaft is greater than the stress on the inner surface when considering a shaft section of constant thickness.

Considering the shaft 102 in the x direction, the first fillet that is encountered is the inner fillet 106, the effect of which can be seen in the local peak in the inner surface stress graph σ*ᵢ*. The local peak commences at axial location *xᵢ,* at the start of the inner fillet 106. It will be noted, however, that owing to the lesser stress experienced on the inner surface, the local stress peak does not rise above the base stress level σₒ₁ in the outer surface over the first portion 108. The stress peak at this axial location is only seen in the inner surface stress graph, as this is the surface on which the inner fillet is present. The global effect of the inner fillet 106 is to increase the wall thickness of the shaft 102 by the inner fillet shoulder height *hᵢ*. This increase in thickness has the global effect of lowering stress levels on both the inner and outer surfaces. This reduction in stress level can be seen in both graphs, the outer stress graph showing a smooth curve from the initial base level σₒ₁, and the inner stress graph lowering to a reduced level after the local peak has been experienced.

At the further axial location *xₒ*, the outer shoulder fillet 104 starts, and its effect can be seen in the local peak in the outer stress graph, commencing at the axial location *xₒ*. However, owing to the reduction in stress caused by the thickening at the inner fillet 106, the local peak in the outer stress graph caused by the outer fillet 104 does not exceed the base stress level σₒ₁ in the outer surface over the first portion 108. The global effect of the outer fillet 104 is to further increase the wall thickness of the shaft 102 by the outer fillet shoulder height *hₒ*. This increase in thickness also has the global effect of lowering stress levels on both the inner and outer surfaces. This reduction in stress level can be seen in both graphs, the inner stress graph showing a smooth curve downward from its previous level, and the outer stress graph lowering to a reduced level after the local peak has been experienced.

The shaft of the present invention thus avoids the generation of local stress concentrations that exceed the maximum base stress level in the first portion, by staggering the effects of the inner and outer fillets. The inner fillet is placed closer to the first portion so that, when considered in the x direction, the effect of the inner fillet is experienced first. It will be appreciated that it is the location of the shoulder fillets relative to the first lesser wall thickness portion that is determinative. Thus, regardless of the relative axial location of the first and second portions, the inner fillet is offset towards the first portion, relative to the outer fillet.

Close control of the shoulder heights, fillet radii and separation d between the inner and outer fillets enables corresponding control of the resulting local stress peaks within the component. In this manner, it can be ensured that the local stress peaks do not raise the stress in the transition region 112 to a level above the base level σₒ₁ in the outer surface of the shaft over the first portion 108. If the shaft 102 is a test component, with the first portion comprising the test feature and the second portion being thickened for restraint within a testing rig, the invention ensures that failure of the component will take place in the test portion 108, and will not be initiated by stress peaks in the transition region to the thickened portion 110. This greatly increases the likelihood of a successful test. If the shaft 102 is a standard machine component having a change in wall thickness, the present invention ensures that the transition between thicknesses does not act as a local failure initiation site, and thus weaken the component.

It will be appreciated that the control of local stress peaks is effected without the need to greatly increase the fillet radii, and thus without the cost increases associated with larger fillet radii.

## Claims

1. A hollow shaft for transmitting torsion or bending forces, comprising:
a first portion having a first wall thickness;
a second portion having a second wall thickness which is greater than the first wall thickness; and
a transition region between the first and second portions comprising inner and
outer annular shoulder fillets;
wherein the inner shoulder fillet is axially offset from the outer shoulder fillet towards the first portion; and
in a direction towards the second portion along the inner shoulder fillet, the wall thickness is increased; and
in the same direction along the outer shoulder fillet, the wall thickness is further increased.

2. A hollow shaft as claimed in claim 1, wherein the radius of the inner shoulder fillet is less than or equal to the radius of the outer shoulder fillet.

3. A hollow shaft as claimed in claim 1 or 2, wherein an axial separation between the start locations of the inner and outer shoulder fillets is greater than or equal to half the inner shoulder fillet radius.

4. A hollow shaft as claimed in any one of claims 1 to 3, wherein the shoulder height of the inner shoulder fillet is greater than or equal to the shoulder height of the outer shoulder fillet.

5. A hollow shaft as claimed in any one of the preceding claims, wherein the second portion comprises a mounting portion for a testing apparatus.

6. A hollow shaft as claimed in any one of the preceding claims, wherein the shaft comprises a component part of an engine.

7. A method of forming a transition region between first and second portions of a hollow shaft, the wall thickness of the second portion being greater than the wall thickness of the first portion, the method comprising:
forming an outer annular shoulder fillet; and
forming an inner annular shoulder fillet that is axially offset from the outer shoulder fillet towards the first portion such that
in a direction towards the second portion along the inner shoulder fillet, the wall thickness is increased; and
in the same direction along the outer shoulder fillet, the wall thickness is further increased.
